# EUROPÄISCHE PATENTANMELDUNG

(11) **EP 0 699 523 A2**
(43) Veröffentlichungstag der Anmeldung: **06.03.1996**
(21) Anmeldenummer: 95112364.5
(22) Anmeldetag: 05.08.1995
(51) Int. Cl.: B32B 31/28, B60R 13/02, B32B 27/32

(54) **Verfahren zur Herstellung eines Bauteils und Bauteil, insbesondere für den Kraftfahrzeug-Innenbereich**

(30) Priorität: 05.09.1994 DE 4431622
(71) Anmelder: Benecke-Kaliko Aktiengesellschaft, D-30419 Hannover (DE)
(72) Erfinder: Pröpper, Johannes Dipl.-Ing., D-73054 Eislingen (DE); Sluka, Albrecht Dr. rer. nat., D-73033 Göppingen (DE); Reichert, Dieter Dr. rer. nat., D-73084 Salach (DE)
(74) Vertreter: Patentanwälte Thömen & Körner

(57) **Zusammenfassung**

Verfahren zur Herstellung eines Bauteils, insbesondere für den Kraftfahrzeug-Innenbereich und das Bauteil selbst beschrieben.

Das Bauteil besteht aus einem Bauteilkörper, der mit einer ein- oder mehrschichtigen Folie auf Basis olefinischer Polymere verkleidet ist. Diese Folie aus thermoelastischen und/oder thermoplastischen Polyolefinen und Co-, Pfropf- und/oder Terpolymerisaten aus alpha-Olefinen mit polaren Gruppen wird mit dem Bauteilkörper verbunden oder umhülltdiesen. Danach werden Nahtstellen der Folie durch Hochfrequenz-Verschweißen erzeugt und anschließend das gesamte Bauteil einer Elektronenstrahl-Vernetzung unterzogen.

## Beschreibung

Die Erfindung betrifft ein Verfahren zur Herstellung eines Bauteils sowie das Bauteil selbst, insbesondere für den Kraftfahrzeug-Innenbereich.

Im Kraftfahrzeug-Innenbereich sowie im Büro- und Organisationsbereich sind Bauteile bekannt, die aus einem mit einer Folie verkleideten Bauteilkörper bestehen. Beispiele im Kraftfahrzeugbereich sind Sonnenblenden, Armaturentafeln, Dach- und Seitenverkleidungen sowie Sitze und im Büro-Organisationssektor Sessel, Türverkleidungen, Etuis, Hüllen von Taschenkalendern und Unterschriftsmappen sowie Schreibunterlagen.

Um die verwendeten Bauteilkörper mit einer Folie zu verkleiden ist es dabei erforderlich, die Folie an Nahtstellen mit dem Bauteilkörper oder mit sich selbst zu verschweißen. Eine optisch besonders hochwertige Verschweißung ergibt sich bei der Hochfrequenz-Verschweißung, da hier die zum Verschweißen entstehende Wärme punktuell konzentriert werden kann. Damit eine Erwärmung durch Hochfrequenz-Einwirkung zustande kommen kann, muß das Material polare Eigenschaften aufweisen.

Bei bisher üblichen Polyvinylchlorid-Folien ist dies der Fall. Dieses Material besitzt aber Nachteile bei der Entsorgung, da als Abbau- oder Verbrennungsprodukte umweltschädliche Stoffe entstehen können. Deshalb wird angestrebt, auf umweltverträgliche Materialien auszuweichen.

Als Ersatzstoffe sind hierbei Polyolefine geeignet, da diese keine Halogene enthalten. Polyolefine sind jedoch unpolar und deshalb nicht hochfrequenz-schweißbar. In diesem Fall wäre ein Verschweißen der Nahtstellen nur mittels anderer Schweißverfahren möglich. Diese Schweißverfahren ermöglichen aber nicht eine so präzise Schweißung, wie das Hochfrequenz-Schweißverfahren.

Um eine Hochfrequenz-Schweißbarkeit zu erzielen, könnten Co-, Pfropf- und/oder Terpolymere aus alpha-Olefinen mit polaren Gruppen zugemischt werden. Dies führt aber zu dem Nachteil, daß mit steigendem Anteil an alpha-Olefinen mit polaren Gruppen und damit mit zunehmender Hochfrequenz-Schweißbarkeit die thermische Stabilität sinkt. Diese unzureichende thermische Stabilität wirkt sich sowohl auf die Haltbarkeit der Nahtstellen als auch im Falle von genarbten Folien auf die Narbbeständigkeit negativ aus.

Bisherige Versuche haben gezeigt, daß bei polyolefinischen Folien ein Zumischen dieser Co-, Pfropf- und/oder Terpolymere mit alpha-Olefinen in einem Maße, daß eine gute Hochfrequenz-Schweißbarkeit gegeben war, die fertigen Bauteile nicht mehr die von der Kraftfahrzeugindustrie geforderten thermischen Stabilitäten bei wenigstens 105° C erfüllen konnten.

Der Erfindung liegt die Aufgabe zugrunde, ein Verfahren zur Herstellung von Bauteilen aus mit einer Folie aus thermoplastischen Olefinen verkleideten Bauteilkörpern anzugeben, sowie ein solches Bauteil zu schaffen, dessen Folie umweltverträglich und hochfrequenz-schweißbar ist und eine verbesserte thermische Stabilität der Nahtfestigkeit und Narberhaltung zeigt.

Diese Aufgabe wird bei einem Verfahren nach dem Oberbegriff des Anspruchs 1 durch die im Kennzeichen des Anspruchs 1 angegebenen Merkmale und bei einem Bauteil gemäß dem Oberbegriff des Anspruchs 3 durch die im Kennzeichen des Anspruchs 3 angegebenen Merkmale gelöst.

Die verwendeten Kunststoffmaterialien der Folie beinhalten fast ausschließlich Wasserstoff, Kohlenstoff und Sauerstoffatome, so daß bei der Entsorgung keine umweltgefährdenden Stoffe entstehen. Durch die Zumischung von alpha-Olefinen mit polaren Gruppen erhält der Kunststoff polare Eigenschaften, die eine Hochfrequenz-Schweißbarkeit ermöglichen. In der Praxis wird der Anteil an alpha-Olefinen mit polaren Gruppen nur so groß gewählt, daß die Schweißbarkeit auf üblichen Hochfrequenz-Schweißanlagen durchführbar ist, da ein zu hoher Anteil von alpha-Olefinen mit polaren Gruppen die thermische Stabilität stark vermindert.

Der Kunststoffanteil der Folie kann bei Polyolefinen zwischen 1 bis 90 Gew.% und bei Co-, Pfropf- und/oder Terpolymerisaten die sich zu 100 Gew.% ergänzende Restmenge, also 99 bis 10 Gew.% betragen. Von den Co-, Pfropf- und/oder Terpolymerisaten wiederum kann der Anteil an alpha-Olefinen mit polaren Gruppen zwischen 80 bis 1 Gew.% betragen.

Der bevorzugte Bereich liegt zwischen 30 und 60 Gew.% Polyolefinen und einer sich zu 100 Gew.% ergänzenden Restmenge Co-, Pfropf- und/oder Terpolymerisate.

Die Folie kann neben Kunststoff auch Anteile Füllstoff und/oder Füllstoffmasterbatch in einem Bereich zwischen 0 bis 50 Gew.% Bereich haben. Bevorzugt ist ein eingeschränkter Bereich zwischen 0 und 25 Gew.%.

Zusätzlich kann das Folienmaterial auch Anteile Flammschutzmittel und/oder Flammschutzmittelmasterbatch enthalten. Hier ist ebenfalls ein Anteil zwischen 0 und 50 Gew.% möglich. Bevorzugt ist ein eingeschränkter Bereich zwischen 0 und 25 Gew.%.

Für eine farbliche Gestaltung der Folie kann dem Material Pigment oder Pigmentmasterbatch zugefügt werden. Es kommt hier ein Anteil zwischen 0 und 10 Gew.% in Betracht. Bevorzugt ist ein Bereich zwischen 1 und 5 Gew.%.

Zweckmäßig sind weiterhin Hilfsstoffe zur Verbesserung der Verarbeitungseigenschaften und der Alterungsbeständigkeit. Hilfsstoffe, die Verwendung finden können, sind Verarbeitungshilfsmittel, Gleitmittel, Stabilisatoren, Prozeßöle, UV-Absorber und/oder Antioxidanzien. Ihr Anteil an der Folie kann zwischen 0 bis 10 Gew.% betragen. Von praktischer Bedeutung ist ein Bereich zwischen 0,1 und 5 Gew.%.

Zur Herstellung räumlicher Bauteile wird ein aus einer Folienbahn gewonnener Zuschnitt entweder separat thermisch umgeformt und dann auf den Bauteilkörper gelegt oder zuvor auf den Bauteilkörper gelegt. Zur Ausbildung von Nahtstellen wird anschließend die Folie mit dem Bauteilkörper oder mit sich selbst hochfrequenz-verschweißt. Eine Verschweißung mit sich selbst kommt bei vollverkleideten Bauteilkörpern in Betracht, dessen Vor- und/oder Rückseite mit jeweils einem Folienzuschnitt belegt wird. Hier werden anschließend die Ränder der beiden Folienzuschnitte miteinander durch Hochfrequenz-Schweißen verbunden werden.

Beim Hochfrequenz-Schweißen läßt sich die Erwärmung punktuell konzentrieren, so daß eine sehr saubere Verbindung möglich ist. Das unter der Hochfrequenz-Einwirkung schmelzende Material kann dabei durch die Elektroden verdrängt werden, so daß nach außen die Übergänge zwischen der Naht und den angrenzenden Folienbereichen eben sind, während die die stabile Verbindung sichernde Materialanhäufung der Naht nach innen weist und somit nicht sichtbar ist. Bei dieser Hochfrequenz-Schweißung lassen sich vorhandene Anlagen, die für Hochfrequenz-Verschweißung von PVC-Folien angeschafft wurden, weiter verwenden.

Das bereits die endgültige Form aufweisende Bauteil wird schließlich als Ganzes einer Elektronenstrahl-Vernetzung unterzogen, die die thermische Stabilität wesentlich verbessert.

Die zur Vernetzung erforderliche Strahlendosis liegt zwischen 10 und 120 Kilo-Gray. Bevorzugt ist hierbei ein Bereich zwischen 30 und 70 Kilo-Gray.

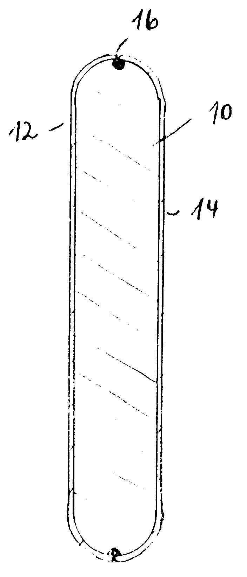

Nachfolgend wird die Erfindung anhand eines Ausführungsbeispiels, das in der Zeichnung dargestellt ist, erläutert.

Die Zeichnung zeigt einen Querschnitt durch ein Bauteil, hier eine Sonnenblende für ein Kraftfahrzeug. Die Sonnenblende besteht aus einem den Bauteilkörper bildenden Sonnenblendenkörper 10 und zwei Teilfolien 12, 14, die die Vorder- und Rückseite des Sonnenblendenkörpers 10 verkleiden und durch eine umlaufende Schweißnaht 16 an der Schmalseite der Sonnenblende verbunden sind.

Der Sonnenblendenkörper 10 besteht aus einem geschäumten Kunststoff. Als Rezeptur für die Folie 12, 14 werden folgende Materialien verwendet: 40 Gew.% Ethylenvinylacetat mit 28 Gew.% Anteilen Vinylacetat, 35 Gew.% Polyethylen, 1,8 Gew.% Pigment, 0,2 Gew.% Benzotriazol als Stabilisator, 15 Gew.% Kreide als Füllstoff und 8 Gew.% Aluminiumhydroxyd als Flammschutzmittel.

Zuschnitte aus einer Folienbahn dieser Rezeptur werden so um den Sonnenblendenkörper gelegt, daß die Folie an dem Sonnenblendenkörper anliegt. Anschließend werden die Folien miteinander hochfrequenz-verschweißt, wobei überstehende Zonen abgetrennt werden. Die fertigen Sonnenblenden werden nun z. B. zu Verpackungseinheiten zusammengefaßt und einer Elektronenstrahlquelle zur Elektronenstrahl-Vernetzung ausgesetzt.

Mit der vorerwähnten Rezeptur des Folienmaterials ergab sich bei einer Strahlendosis von 66 Kilo-Gray eine einwandfreie Haltbarkeit der Nähte und Narbstabilität gegenüber der ungealterten Probe bei einer Temperatur-Behandlung der kompletten Sonnenblende von größer/gleich 120° C. Damit konnten die von der Kraftfahrzeugindustrie gestellten Forderungen hinsichtlich der thermischen Stabilität übertroffen werden.

## Patentansprüche

1. Verfahren zur Herstellung eines Bauteils, insbesondere für den Kraftfahrzeug-Innenbereich, bestehend aus einem Bauteilkörper, der mit einer ein- oder mehrschichtigen Folie auf Basis olefinischer Polymere verkleidet ist, **dadurch gekennzeichnet**, daß diese Folie aus thermoelastischen und/oder thermoplastischen Polyolefinen und Co-, Pfropf- und/oder Terpolymerisaten aus alpha-Olefinen mit polaren Gruppen mit dem Bauteilkörper verbunden oder diesen umhüllt, danach Nahtstellen der Folie durch Hochfrequenz-Verschweißen erzeugt werden und anschließend das gesamte Bauteil einer Elektronenstrahl-Vernetzung unterzogen wird.

2. Verfahren nach Anspruch 1, **dadurch gekennzeichnet,** daß das Bauteil einer Strahlendosis zwischen 10 und 120 Kilo-Gray ausgesetzt wird.

3. Bauteil, insbesondere zum Einsatz im Kraftfahrzeug-Innenbereich, aus einem mit einer ein- oder mehrschichtigen Folie (12, 14) auf Basis olefinischer Polymere verkleideten Bauteilkörper (10), **dadurch gekennzeichnet**, daß die Folie (12, 14) thermoelastische und/oder thermoplastische Polyolefine sowie Co-, Pfropf- und/oder Terpolymerisate aus alpha-Olefinen mit polaren Gruppen umfaßt, wobei die Folie (12, 14) an Nahtstellen (16) hochfrequenz-verschweißt ist und elektronenstrahl-vernetzt ist.

4. Bauteil nach Anspruch 3, **dadurch gekennzeichnet,** daß die Folie zusätzlich Füllstoff und/oder Füllstoffmasterbatch umfaßt.

5. Bauteil nach einem der Ansprüche 3 bis 4, **dadurch gekennzeichnet**, daß die Folie zusätzlich Flammschutzmittel und/oder Flammschutzmittelmasterbatch umfaßt.

6. Bauteil nach einem der Ansprüche 3 bis 5, **dadurch gekennzeichnet**, daß die Folie zusätzlich Pigment und/oder Pigmentmasterbatch umfaßt.

7. Bauteil nach einem der Ansprüche 3 bis 6, **dadurch gekennzeichnet**, daß die Folie zusätzlich Hilfsstoffe, wie Verarbeitungshilfsmittel und/oder Gleitmittel und/oder Stabilisatoren und/oder Prozeßöle und/oder UV-Absorber und/oder Antioxidanzien umfaßt.

8. Bauteil nach einem der Ansprüche 3 bis 7, **dadurch gekennzeichnet,** daß der Anteil von Polyolefine 1 bis 90 Gew.% und der Anteil von Co-, Pfropf- und/oder Terpolymerisaten 99 bis 10 Gew.% beträgt, wobei die Co-, Pfropf- und/oder Terpolymerisate 80 bis 1 Gew.% alpha-Olefine mit polaren Gruppen umfassen.

9. Bauteil nach Anspruch 4, **dadurch gekennzeichnet**, daß der Anteil Füllstoff und/oder Füllstoffmasterbatch 0 bis zu 50 Gew.% beträgt.

10. Bauteil nach Anspruch 5, **dadurch gekennzeichnet,** daß der Anteil Flammschutzmittel und/oder Flammschutzmittelmasterbatch 0 bis 50 Gew.% beträgt.

11. Bauteil nach Anspruch 6, **dadurch gekennzeichnet,** daß der Anteil Pigment und/oder Pigmentmasterbatch 0 bis 10 Gew.% beträgt.

12. Bauteil nach Anspruch 7, **dadurch gekennzeichnet,** daß der Anteil Hilfsstoffe 0 bis 10 Gew.% beträgt.

13. Bauteil nach einem der Ansprüche 3 bis 12, **dadurch gekennzeichnet,** daß die alpha-Olefine mit polaren Gruppen aufgebaut sind, aus Co-, Pfropf- und/oder Terpolymeren basierend auf Ethylen und/oder deren höheren Homologen und/oder deren verzweigten Isomeren mit alpha-olefinischen Monomeren mit polaren Gruppen, insbesondere Vinylacetat und/oder Vinylether und/oder Vinylester und/oder Vinylalkohole und/oder Acrylate.

14. Bauteil nach einem der Ansprüche 3 bis 13, **dadurch gekennzeichnet,** daß die Strahlendosis der Elektronenstrahl-Vernetzung zwischen 10 und 120 Kilo-Gray beträgt.

15. Bauteil nach einem der Ansprüche 3 bis 13, **dadurch gekennzeichnet,** daß die Strahlendosis der Elektronenstrahl-Vernetzung anhand von in Vorversuchen ermittelten Werten so bemessen ist, daß eine thermische Beständigkeit, wie Nahthaftung und Narberhaltung bis wenigstens 120° C eintritt.
